# EUROPEAN PATENT APPLICATION

(11) **EP 1 924 048 A1**
(43) Date of publication of application: **21.05.2008**
(21) Application number: 06291795.0
(22) Date of filing: 17.11.2006
(51) Int. Cl.: H04L 29/06, H04Q 7/38

(54) **Telecommunications system and method for user authorisation**

(71) Applicant: France Télécom, 75015 Paris (FR)
(72) Inventor: Reynolds, Paul, Easton, Wells BA5 1AT (GB); Crane, Richard, Stapleton Bristol BS16 1WP (GB)
(74) Representative: DeVile, Jonathan Mark

(57) **Abstract**

A telecommunications system includes a communications terminal and an authentication server. The authentication server is arranged to store authorisation data providing an indication of one or more communications services for which the communications terminal has been authorised to provide to a subscriber. The communications terminal includes a subscriber identity module, a network access transceiver, an application processor and an authorisation interface. The network access transceiver is operable to communicate data to and from an access network. The application processor is operable in combination with the network access transceiver to provide the communications service requested by the subscriber. The authorisation interface is operable to control access by the application processor to the network access transceiver, in response to the application processor accessing the network access transceiver to provide the communications service requested by the subscriber, the control including
identifying the subscriber identity module of the communications terminal,
identifying the communications service which is to be provided by the application program requested by the subscriber, and
controlling deployment of the communications service depending on whether the identified communications service has been authorised for the identified subscriber identity module in accordance with the authorisation data communicated from an authorisation server. As such telecommunication operators can authorise and provision services to subscribers via different network access technologies (such as GPRS/GSM, WiFi, Bluetooth, WiMax, Infra-red etc) using a common authorisation/attachment procedure.

## Description

### Field of the Invention

The present invention relates to telecommunications systems which are arranged to provide a facility for communicating data to communications terminals and which include an authorisation server having stored therein information identifying communications services, which the communications terminals have been authorised to receive.

The present invention also relates to communications terminals which include subscriber identity modules and subscriber identity modules.

### Background of the Invention

Access networks such as mobile communications access networks provide a facility for users to receive mobile communications services of various types such as voice, video and data using mobile communications terminals. Conventionally, a subscriber to a mobile communications network will receive one or more services from that network and will be charged by the operator of the network for the services which have been used based on an amount of data which has been transferred to and from the access network to provide that service.

There is an increasing diversity in the type of communications access networks via which a mobile terminal can receive a communications service. For example, the prevalence of internet protocols and access networks which are able to operate to support internet protocols, has meant that various communication services can be provided via different access networks, which utilise different access interface standards, such as 3G/GPRS, WiFi or WiMax. The access networks may provide a facility for mobile communications or they may provide a facility for fixed line communications. Such a system of access networks operating in accordance with different interface standards can be referred to as a heterogeneous telecommunications system. In one example, a communications service may be a voice communication service which may be supported by a circuit switched network such as one operating in accordance with the Global System for Mobiles (GSM) or may be supported via a WiFi network using so called Voice over IP (VoIP (voice over an internet protocol)). However, as a user roams and communicates using a communications terminal and wishes to access different access networks in order to support a communications service such as voice communications, the user should be able to enjoy the communications service via different access networks without an inconvenience caused by having to arrange authorisation for accessing the communications service via the different access networks. A technical problem therefore exists in providing an arrangement in which a mobile communications terminal can receive a communications service by communicating data via different access networks to the effect that accounting and authorisation of the communication of the data via the different access networks can be made conveniently.

### Summary of the Invention

According the present invention there is provided a telecommunications system, comprising a communications terminal and an authentication server. The authentication server is arranged to store authorisation data providing an indication of one or more communications services for which the communications terminal has been authorised to provide to a subscriber. The communications terminal includes a subscriber identity module, a network access transceiver, an application processor and an authorisation interface. The network access transceiver is operable to communicate data to and from an access network. The application processor is operable in combination with the network access transceiver to provide the communications service requested by the subscriber. The authorisation interface is operable to control access by the application processor to the network access transceiver, in response to the application processor accessing the network access transceiver to provide the communications service requested by the subscriber, the control including
identifying the subscriber identity module of the communications terminal,
identifying the communications service which is to be provided by the application program requested by the subscriber, and
controlling deployment of the communications service depending on whether the identified communications service has been authorised for the identified subscriber identity module in accordance with the authorisation data communicated from an authorisation server.

Embodiments of the present invention can enable telecommunication network operators to authorise and provision services to subscribers via different network access technologies (such as GPRS/GSM, WiFi, Bluetooth, WiMax, Infra-red etc) using a common authorisation/attachment procedure. For example, the common authorisation/attachment procedure may be provided in an application programmer's interface (API). As such, a subscriber is provided with added convenience, because embodiments of the present invention can remove a requirement to arrange authorisation/attachment for each different network access technology which the user may wish to access. Furthermore, the telecommunications network operator may wish to monitor or control access by its subscribers to certain network access technologies, such as those for example which are unregulated to improve a likelihood that a user is not exposed to a quality of service which is below an acceptable level. To this end, the authorisation data is communicated to the authorisation interface from the authorisation server. The authorisation data may include one or more of an indication communications service or services which are allowed, an indication of one or more access networks which the communications terminal can use to support the communications services, or one or more service providers which have been authorised to provide the one or more of the communications services to the communications terminal. As a result of the authorisation interface having local access to the authorisation data, the authorisation interface can control access to the network access transceiver and/or deployment of the communications service. The control may include one or more of:
• preventing access by the application processor to the network access transceiver, if the communications service has not been authorised as represented by the authorisation data, or
• allowing access by the application processor to the network access transceiver in accordance with predetermined conditions, such as a different charging tariff depending upon whether the communications service is authorised or not, or
• allowing use of an access network for communicating the data to provide the communications service under predetermined conditions, such as a different charging tariff depending upon whether the communications service is authorised or not.

In some embodiments, the authorisation interface may be arranged to generate usage data representing the communications service which has been deployed to the communications terminal and/or the access network which was used to communicate data in order to support the communications service. The authorisation interface may then use the network access transceiver to communicate the usage data to the authorisation server. The authorisation server may be arranged to receive the usage data, to apply the usage data to the authorisation data representing the communications services which have been authorised for the subscriber, and to generate billing data representing a cost to the user for using the authorised communications services. In some examples, the cost to the subscriber may be different depending upon the communications services used by the subscriber, the access network which the communications terminal used to support the communications services, or the service providers which provided one or more of the communications services to the communications terminal.

Various further aspects and features of the present invention are defined in the appended claims.

### Brief Description of the Drawings

Embodiments of the present invention will now be described with reference to the accompanying drawings in which like parts have common alpha/numeric designations and wherein;
Figure 1 is a schematic diagram of a General Packet Radio System (GPRS) network;
Figure 2 is a schematic illustration of a virtual network utilising embodiments of the present invention;
Figure 3 is a schematic block diagram of a communications terminal which is arranged to communicate via different access networks in accordance with the present technique;
Figure 4 is another example schematic block diagram of a communications terminal which is arranged to utilise different communications services in accordance with the present technique;
Figure 5 is a schematic illustration of a process through which a communications terminal receives authorisation data identifying services which a subscriber has been authorised to use;
Figure 6 is a schematic illustration illustrating an operation in which a communications terminal receives authorisation to deploy a particular service;
Figure 7 is a schematic illustration of an operation in which a communications terminal is not authorised to deploy a particular service or allowed to deploy a particular service under predetermined conditions;
Figure 8 is a schematic illustration of an operation of a communications terminal and an authorisation server which is arranged to account for communication services provided to the subscriber;
Figure 9 is a schematic illustration of a process for informing the subscriber of a cost or charge for a particular communication session; and
Figure 10 is a schematic illustration of an operation of an authorisation server to generate a charge to the subscriber for communications services provided.

### Description of Example Embodiments

Embodiments of the present invention provide a facility for authorising and accounting for communication services deployed to a subscriber which is at least to some extent network independent. That is to say, the communications services are accounted for in accordance with a use of those communication services via different access networks through which the data has been communicated to support those services. Thus the telecommunication system is substantially "network-less" in the sense that many different networks can be used to provide different communication services to the user and an arrangement is provided in accordance with embodiments of the present invention to authorise the use of these different networks and to account for that use in a way which is transparent to the subscriber. In other words the different access networks can be thought of as one virtual network. As such, the subscriber will subscribe to a telecommunications operator and the telecommunications operator will arrange for the subscriber to use the different access networks, which may themselves be owned and operated by different network providers. The network providers may charge the telecommunications operator for the use of the different access networks and the telecommunications operator may then charge the subscriber for the use of those different access networks. As such, the telecommunications operator may pre-arrange for the use of different access network for its subscribers, so that the subscriber is not burdened with a requirement to arrange credit terms, administration and accounting for each of the access networks which may be used.

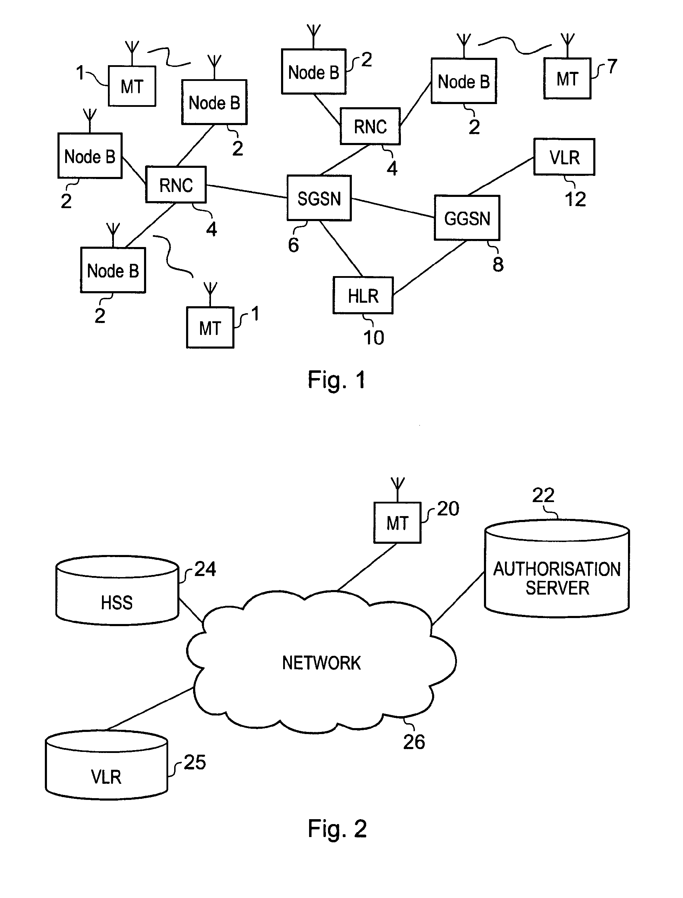

In one example, the subscriber is a mobile subscriber using a mobile communications terminal, although it will be appreciated that embodiments of the present invention are not dependent on a particular access technology and the terminal may indeed be fixed and not mobile. Advantages provided by the embodiments of the present invention may be better appreciated by referring to Figures 1 and 2.

Figure 1 provides an example block diagram of a conventional telecommunications network operating in accordance with a known GPRS standard. In Figure 1 mobile terminals 1 communicate via a radio access interface standard in accordance with GSM/GPRS or 3G/GPRS with base stations which are known as "Node Bs" 2. The Node Bs 2 are connected to radio network controllers (RNC) 4 which in turn are connected to serving GPRS support nodes (SGSN) 6. The Node Bs and radio network controllers (RNC) 2, 4 form a radio network part of a GPRS network. The SGSN in combination with a gateway GPRS support node (GGSN) 8 form a so called core network part of the GPRS network. More details of the GPRS architecture can be found in "GSM, cdmaOne and 3G Systems" by Raymond Steel et al ISBN 0471491853.

In accordance with a conventional operation the mobile terminals 1 are provided with a facility for communicating data via the GPRS network and so provide a communications service to the subscriber via the GPRS network. The mobile terminals 1 have a subscriber identity module (SIM) which is used to uniquely identify the subscriber. When a mobile terminal 1 sets up a communications session or "call", the mobile terminal 1 interrogates the SIM to determine whether the mobile terminal is authorised to make that call. When the mobile terminal 1 becomes active it is registered with a home location register 10 which is attached to the SGSN 6 and the GGSN 8. The HLR 10 includes an entry for each mobile terminal which has subscribed to the GPRS network to receive communications services. Thus, once the SIM has authorised the communications service a call is set up via the GPRS network and that call is registered with the home location register 10 so that the GGSN or some other part in the GPRS network can determine an amount of data communicated during that call and generate an appropriate charge to the subscriber of the mobile terminal 1 for making that call.

Also shown for completeness in Figure 1 is a visitor location register 12 which is used for mobility management but otherwise does not assist in explaining and illustrating advantages provided by example embodiments.

As mentioned above, embodiments of the present invention provide an arrangement in which communication services can be provided to mobile terminals or indeed communications terminals generally in a way which removes an association between a body or company to which the subscriber has subscribed to receive communication services and the communications networks which have been used to communicate data to support those services. As such, Figure 2 provides an illustrative representation of elements of a telecommunications system in accordance with which embodiments of the present invention find application. In one respect the arrangement of Figure 2 can be thought of as a virtual network in analogy with a virtual private network (VPN). As shown in Figure 2 the telecommunications system consists of a communications terminal 20 which may be a fixed or a mobile communications terminal, an authorisation server 22 for authorising the deployment of communications services and the use of access networks and for generating charges to the subscriber, a home subscriber server, such as for example an HLR 24 and a visitor location register 25, which tracks the location of the mobile terminal 20. The mobile terminal 20 receives communications services via different networks, which can be thought of effectively as a virtual network 26 although this may be made up of various access networks using different access interface technologies. Of course the mobile terminal 20 has to be provided with an appropriate network communications transceiver, which can access the different access interfaces required by each of the different access networks through which data is to be communicated.

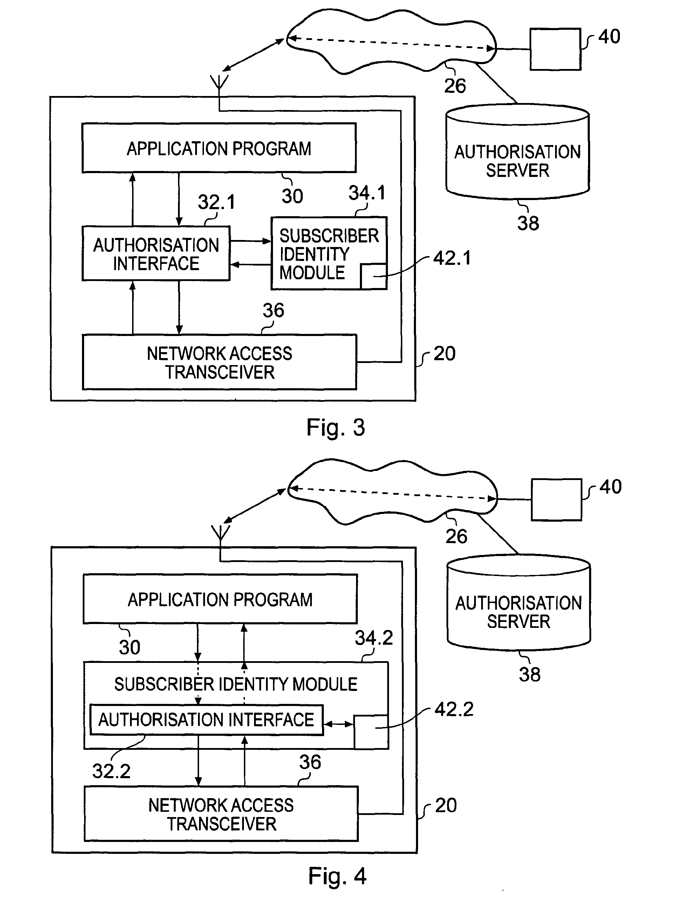

Figure 3 provides an example of a communications terminal which has been adapted in accordance with the present technique, which for the present example is a mobile terminal. In Figure 3 the mobile terminal 20 includes an application processor 30, which operates to execute application programs within an application layer, an authorisation interface 32.1 which interfaces with a subscriber identity module 34.1 and a network access transceiver 36. The network access transceiver 36 may be enabled to communicate data via different access networks and so may include data processors which are arranged to communicate via different access technologies such as WiFi, Bluetooth, GPRS, WCDMA in accordance with UMTS or any other interface standard as appropriate, such as a USB cabled interface to an IP broadband connection. The application processor 30 may be arranged to execute different application programs to provide different communications services to the subscriber. The terms application program and application processor may be used interchangeably in the following description.

Conventionally, once a mobile terminal for example has roamed to within a radio coverage area of a particular access network, such as WiFi, GSM or 3G/GPRS, the mobile terminal registers with that access network or attaches in some way for the communication of data via that access network to support a particular communications service. The access network in Figure 3 is represented generally as a cloud 26. Attached to the access network 26 is an authorisation server operating in accordance with the present technique 38. In accordance with a conventional operation, if a subscriber launches an application program 30 at the application layer to provide a particular communications service then data must be communicated via the access network 26 using the network access transceiver 36 to provide that communications service. For example, if the communications service is voice over IP (VoIP), the application program is launched and using internet protocol packets, data representing encoded voice signals is communicated within the internet packets using the network access transceiver 36 via the access network 26, which may be for example a WiFi network to and from a correspondent terminal 40. However, what if the subscriber has purchased the communications terminal from a particular vendor for communication via an access network supported by that vendor, for example the network operator, and then the subscriber accesses a different communications network to activate a VoIP service for which the subscriber is not charged? In this case any subsidy provided by the vendor of the communications terminal cannot be recovered. Furthermore, there may be operational reasons why it is necessary to restrict the communications services which can be deployed and/or the access networks which can be used by a particular subscriber. For example, in order to ensure that a quality of communications provided to a subscriber are at a sufficient level, the telecommunications operator may wish to restrict the access networks through which the subscriber can communicate and/or the communications services which can be deployed to the subscriber. Alternatively, the telecommunications operator may charge differently depending on the communications service or the access network which is being used to support the communications service.

As shown in Figure 3 the communications terminal 20 includes an authorisation interface 32.1. In accordance with the present technique the authorisation interface 32.1 controls access of the application program 30 to the network access transceiver 36 in accordance with predetermined conditions for providing that communications service and/or use of the access network for supporting the communications service. The predetermined conditions may therefore include whether the telecommunications operator has procured access networks to support the communications service required by the subscriber, whether the subscriber has subscribed to the use of that communications service and whether the telecommunications operator has concluded an agreement with an operator of the access network via which the communications terminal is to communicate data to support the communications service. There are various alternative arrangements for providing that information to the communications terminal which will be described shortly. This information will be referred to as authorisation data.

According to the present technique, in one example the authorisation data is stored in a data store 42 on the subscriber identity module 34 in a secure portion. Thus, in accordance with the present technique the subscriber identity module (SIM) includes an encryption/decryption processor as well as a secure hardware store within which the authorisation data 42 can be stored. Such features are conventionally available on a so called "smart card".

For the example shown in Figure 3 the authorisation interface 32.1 is provided as a software element within the communications terminal 20. For example the authorisations interface 32.1 could be an application programmer's interface. Thus whereas conventionally the application program 30, would interface with the network access transceiver 36, in accordance with the present technique the interface with the network access transceiver must go via the authorisation interface 32.1. The authorisation interface 32.1 then interrogates the authorisation data held on the subscriber identity module 34.1 to determine whether or not a particular communications service has been authorised to the subscriber, whether a particular access network has been authorised to the subscriber and if so an appropriate tariff for charging the subscriber for using the communications service and/or the access network. Thus, as will be explained shortly, both the use of that communications service and the access network is determined by the authorisation interface 32.1 and this information may be stored on the subscriber identity module 34.1. Similarly, the authorisation data which identifies the conditions for receiving communication services and/or using particular access networks is communicated from the application server 38 to the communications terminal 20 and stored by the subscriber identity module 34.1 in the secure store 42.1. Caching the authorisation data locally on the SIM reduces latency in accessing the network by providing temporary authorisation and accounting. At convenient times, the authorisation interface 32.1 communicates transparently and securely with the authorisation server 38 to confirm authorisation and to transfer incremental accounting data.

An alternative arrangement is shown in Figure 4. Figure 4 corresponds substantially to the arrangement shown in Figure 3 except that the authorisation interface 32.2 is provided within the subscriber identity module 34.2. Thus the subscriber identity module 34.2 contains the authorisation interface 32.2, which may be for example an application programmer's interface. In accordance with the present technique providing the authorisation interface 32.2 on the subscriber identity module 34.2 improves security in storing the authorisation data and usage data (described shortly) to the effect that it is more difficult for an unscrupulous subscriber to hack the authorisation data to gain access to services for which a subscriber has not been authorised or the telecommunications operator has not procured access to a particular access network.

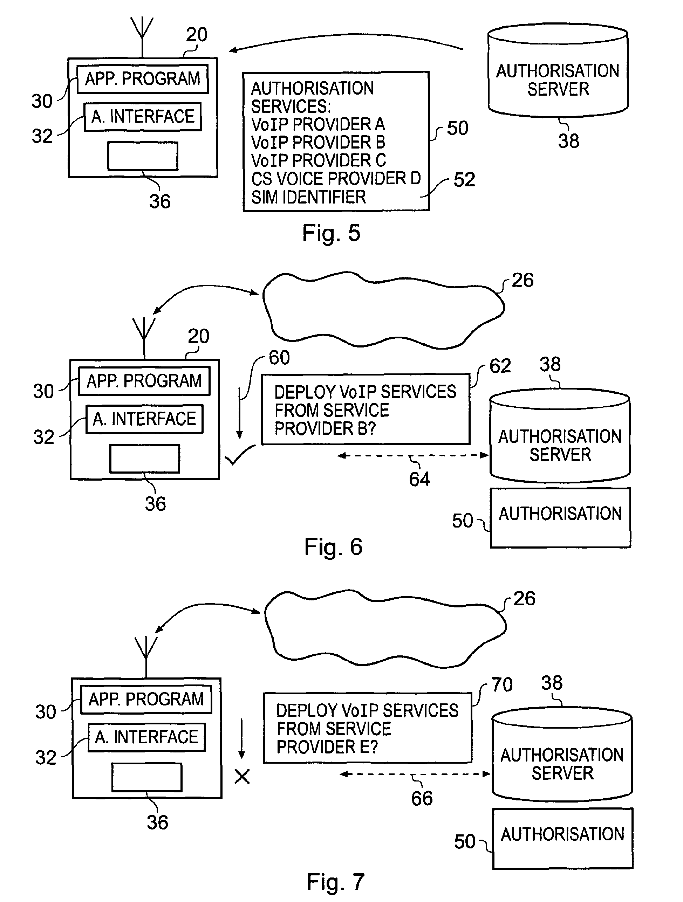

Figures 5, 6 and 7 provide an illustration of a process through which the authorisation data which represents a list of services and/or access networks which a subscriber is authorised to access, can be provided to the communications terminal 20. In one example, the authorisation server 38 which stores the authorisation data, communicates the authorisation data periodically to the communications terminal. The authorisation data on the authorisation server may be up-dated by the telecommunications operator as appropriate, and the authorisation data on the SIM up-dated periodically. The authorisation data may be communicated, for example, whenever the mobile terminal is activated or connected to an access network or when the communication service is first installed and makes its first request for authorisation.

In Figure 5 a representation within a box 50 is provided of the authorisation data. In this example the authorisation data 50 includes a list of services which the subscriber is authorised to use. For example, the subscriber is authorised to use voice over IP from a service provider A, voice over IP from a service provider B, video streaming from a service provider C and voice over IP from a service provider D. In this example, an indication of the service provider (A, B, C, D) also provides an indication of the access networks which the subscriber is authorised to use. In one example the authorisation data may also include an identifier of the subscriber or more particularly an identifier of the subscriber identity module 34.

The authorisation data is received by the communications terminal 20 and stored within the subscriber identity module (SIM) 36 for reference to the authorisation interface 32, in accordance with the examples described with reference to Figures 3 and 4.

Figure 6 provides an example illustration of a process in which a communications service is deployed by the subscriber of the mobile terminal 20. In this example, the communications service provided to the communications terminal 20 is one for which the subscriber has been authorised. As shown by arrow 60 the application program interrogates the authorisation interface 32, which accesses the authorisation data on the SIM 36 to determine whether, for example a VoIP service has been authorised for deployment to the subscriber from a service provider B. The information representing the identification of the service and the service provider is represented within a box 62. Thus, in this example, the mobile terminal 20 has attached to a communications network 26, which for example is a WiFi network, which will therefore support a VoIP service. The operator of the network is the service provider B or is affiliated with the service provider B. As such, as shown for the example in Figure 5, the authorisation data 50 includes an entry for a VoIP service from service provider B. The subscriber is therefore authorised to receive the VoIP service from service provider B, and so the authorisation interface 32 allows access to the network access transceiver 36 by the application program, after consulting the authorisation data stored in the SIM 34.

In one example, the authorisation interface 32 records the amount of data which is communicated by the network access transceiver 36, via the access network to support the communications service and stores this data, referred to as usage data, in the SIM 34 for subsequent communication to the authorisation server 38. Since the VoIP service provided by a service provide B has been approved and the subscriber is authorised to use that service, the telecommunications operator will have arranged a particular tariff to be charged to the subscriber with respect to the use of that service. This will be explained in more detail shortly.

In an alternative embodiment the authorisation interface 32 receives an indication of the service to be deployed and the service provider from the authorisation server 38. The authorisation interface 32 can use the network access transceiver 36 to interrogate the authorisation server 38 on which the authorisation data 50 is contained, as represented by an arrow 64. If the authorisation data 50 includes an indication that the service can be deployed to the subscriber then the authorisation interface 32 allows access to the network access transceiver 36 and the service is activated as would be the case for a conventional operation of a communications terminal. Correspondingly, if authorisation is accepted then the communications service can be deployed and again the use of that service is recorded for generating a charge to the subscriber.

Figure 7 provides an example illustration corresponding to that shown in Figure 6 except that in this case the subscriber is attempting to access a service which has not been authorised to the subscriber. As shown in box 72, the application program 30 attempts to access a VoIP service from a service provider E. However, the service provider E is not listed within the authorisation data 50 for the services to which the subscriber has subscribed. In this case however, there are two options. Either the authorisation interface blocks access to the network access transceiver 36 or alternatively the subscriber can be authorised to use the communications service and the particular access network but a charging tariff for using that communications service and/or the access network is adapted because the subscriber is not authorised to use either the communications service or the access network. As for the example shown in Figure 6, in an alternative arrangement the authorisation interface 32 interrogates the authorisation server 38 to access the authorisation data which is stored on the authorisation server 38 to determine whether or not the communications service or the access network is available to the subscriber in accordance with whether or not either the service or the access network is authorised. This is represented by an arrow 66.

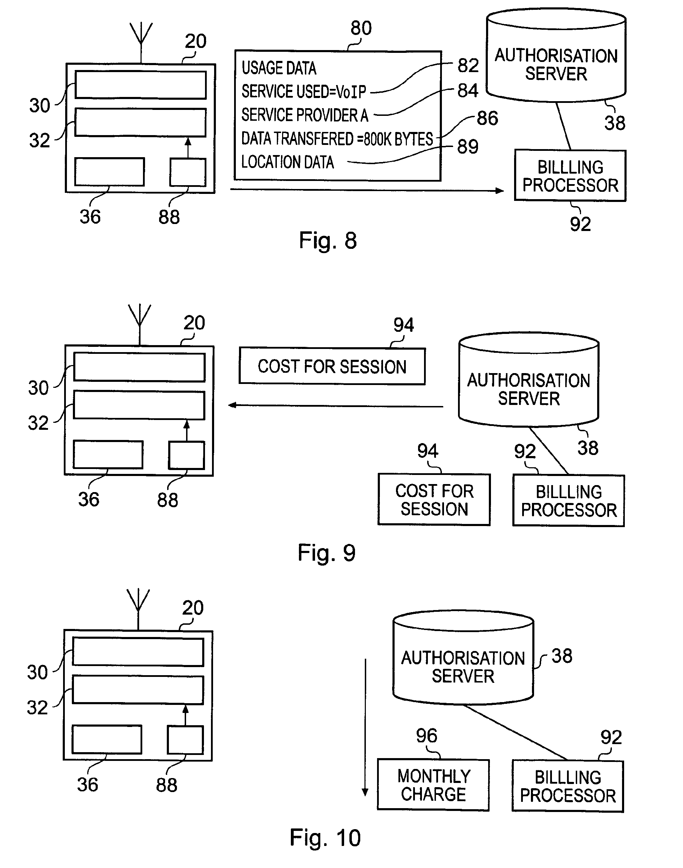

Figures 8, 9 and 10 provide an illustrative example of a process which accounts for a subscriber's use of a communications service or an access network. In Figure 8 at an appropriate time, for example when the communications terminal 20 has attached to a particular access network, usage data representing the usage of a particular communications service and/or a particular access network 80, is communicated from the authorisation interface 32 to the authorisation server 38. As shown in Figure 8 the usage data 80 may include an indication of the communications service used, for example VoIP 82, the service provider 84, which may indicate the access network which was used to communicate data to the support communications service, and an amount of data which was transferred via that access network 86.

Also shown included in the communications terminal 20.1 in Figure 8 is a positioning location identifier, such as a global positioning system (GPS) receiver 88. The positioning location identifier is arranged to generate location data representative of the location of the communications terminal 20.1 when the communications service requested by the subscriber is being provided. As such, the authorisation interface 32 may in one example include the location data 89 in the usage data 80, which is communicated to the authorisation server 38. As will be explained shortly, the location data could be used to charge the subscriber a different amount depending upon the location of the communications terminal 20, when the communications service requested by the subscriber is being provided by the communications terminal 20.

As shown in Figure 9 the authorisation server 38 may include a billing processor 92, which determines a charge for the use of the access network and the communications service in accordance with a particular tariff and an amount of data which is transferred during the communications session. The cost to the subscriber is then determined as represented by a box 94. In one example, the cost for the communications session (or call) is recorded in the billing processor 90 attached to the authorisation server 38. In another example, the cost for the session 94 is communicated to the communications terminal 20 so that this can be displayed to the subscriber. As shown in Figure 10, for example, the telecommunications operator can then generate a monthly charge using the billing processor 94 for sending to the subscriber representing a total charge to the subscriber for the use of access networks within a month. This monthly charge 96 can be communicated to the subscriber by an appropriate means for example, directly to the communications terminal for viewing by the subscriber. Thus, the monthly charge includes all accesses made by the subscriber to authorised or unauthorised communications services and access networks for which a cost is accounted for and charged to the subscriber.

The billing processor 92 may be arranged in combination with the authentication server 38 to apply the usage data to the authorisation data representing the communications services which have been authorised for the subscriber to generate billing data, which is represented by the cost for session box 94. The amount of the charge represented by the billing data for the communications session provided to the subscriber may be calculated differently in accordance with:
• the type of communications services used by the subscriber,
• the access network which the communications terminal used to support the communications services, or
• the service providers which provided the communications services to the communications terminal.

If the usage data provided to the authorisation server by the communications terminals includes the location data, the authorisation server may also take into account the location data, by applying the location data to the authorisation data to generate the billing data in accordance with the location of the communications terminal when communications service was provided to the communications terminal. For example the telecommunications operator may decide to provide a reduced tariff or free calls (communications sessions) when the communications service is provided within the subscribers home.

Various modifications may be made to the examples described above without departing from the scope of the present invention. For example, although a mobile terminal has been used as an illustration, embodiments of the present invention are not limited to mobile communications services or mobile terminals but can equally be applied to fixed communications terminals and fixed networks.

Various further aspects and features of the present invention are defined in the appended claims.

## Claims

1. A telecommunications system includes a communications terminal and an authentication server, the authentication server being arranged to store authorisation data providing an indication of one or more communications services for which the communications terminal has been authorised to provide to a subscriber, wherein
the communications terminal includes
a subscriber identity module,
a network access transceiver, the network access transceiver being operable to communicate data to and from an access network,
an application processor operable in combination with the network access transceiver to provide a communications service requested by the subscriber, and
an authorisation interface operable to control access by the application processor to the network access transceiver, in response to the application processor accessing the network access transceiver to provide the communications service requested by the subscriber, the control including
identifying the subscriber identity module of the communications terminal,
identifying the communications service which is to be provided by the application program requested by the subscriber, and
controlling deployment of the communications service depending on whether the identified communications service has been authorised for the identified subscriber identity module in accordance with the authorisation data communicated from the authorisation server.

2. A telecommunications system as claimed in Claim 1, wherein
the authorisation interface is provided in the subscriber identity module, the application program being arranged to control the communications service by interfacing with the authorisation interface on the subscriber identity module.

3. A telecommunications system as claimed in Claim 1, wherein
the authorisation interface is provided as a software interface for execution by the communications terminal, and
the subscriber identity module is arranged to store the authentication data.

4. A telecommunications system as claimed in any preceding Claim, wherein the authorisation data includes one or more of
an indication of one or more communications services which have been authorised for the subscriber,
an indication of one or more access networks which the communications terminal can use to support the one or more communications services, or
one or more service providers which have been authorised to provide the one or more of the communications services to the communications terminal.

5. A telecommunications system as claimed in any preceding Claim, wherein the authentication server is operable
to communicate the authentication data to the communications terminal, the authorisation interface of the communications terminal being arranged to receive the authentication data and to store the authentication data.

6. A telecommunications system as claimed in Claim 5, wherein the authorisation interface is arranged to store the authentication data in the subscriber identity module.

7. A telecommunications system as claimed in Claim 4, 5 or 6, wherein the authorisation interface is operable
to generate usage data representative of the communications service which has been deployed to the communications terminal and/or the access network which was used to support the communications service, and
to communicate the usage data to the authorisation server.

8. A telecommunications system as claimed in Claim 6, wherein the authorisation server is operable
to receive the usage data,
to apply the usage data to the authorisation data representing the communications services which have been authorised for the subscriber, and
to generate billing data representative of a cost to the user for using the authorised communications services.

9. A telecommunications system as claimed in Claim 8, wherein the authorisation server is operable
to apply the usage data to the authorisation data representing the communications services which have been authorised for the subscriber to generate billing data by charging subscriber differently in accordance with at least one of
the communications services used by the subscriber,
the access network which the communications terminal used to support the communications services, or
the service providers which provided the one or more of the communications services to the communications terminal.

10. A telecommunications system as claimed in Claim 9, wherein the communications terminal includes a positioning location identifier operable to generate location data representative of the location of the communications terminal when the communications service requested by the subscriber is being provided, and the authorisation interface is operable to include the location data in the usage data communicated to the authorisation server, the authorisation server being arranged to apply the location data to the authorisation data to generate the billing data in accordance with the location of the communications terminal when communications service is being provided to the communications terminal.

11. A telecommunications system as claimed in any preceding Claim, wherein the controlling deployment of the communications service to the communications terminal includes at least one of
preventing access by the application processor to the network access transceiver, if the communications service has not been authorised as represented by the authorisation data, or
allowing access by the application processor to the network access transceiver in accordance with predetermined conditions, or
allowing use of an access network for communicating the data to provide the communications service under predetermined conditions.

12. A communications terminal operable to provide a communications service to a subscriber, the communications terminal including
a subscriber identity module,
a network access transceiver, the network access transceiver being operable to communicate data to and from an access network,
an application processor operable in combination with the network access transceiver to provide the communications service requested by the subscriber, and
an authorisation interface operable to control access by the application processor to the network access transceiver, in response to the application processor accessing the network access transceiver to provide the communications service requested by the subscriber, the control including
identifying the subscriber identity module of the communications terminal,
identifying the communications service which is to be provided by the application program requested by the subscriber, and
controlling deployment of the communications service depending on whether the identified communications service has been authorised for the identified subscriber identity module in accordance with the authorisation data communicated from an authorisation server.

13. A method of providing one or more communications services to a communications terminal in accordance with authorisation data provided by an authorisation server, the authorisation data providing an indication of one or more communications services for which the communications terminal has been authorised to provide to a subscriber, and the communications terminal includes a subscriber identity module and a network access transceiver, the network access transceiver being arranged to communicate data to and/or from an access network in accordance with an application program for providing a communications service requested by the subscriber, the method comprising
controlling access by the application program to the network access transceiver, in response to the application program accessing the network access transceiver to provide a communications service requested by the subscriber, wherein the control includes
identifying the subscriber identity module of the communications terminal,
identifying communications service which is to be provided by the application program requested by the subscriber, and
controlling deployment of the communications service depending on whether the identified communications service has been authorised for the identified subscriber identity module in accordance with the authorisation data communicated from an authorisation server.

14. A data carrier having recorded thereon information signals representative of a computer program, which, when loaded onto a computer, causes the computer to perform the method according to Claim 13.

15. A subscriber identity module for use in a communications terminal, the subscriber identity module including an authorisation interface, the authorisation interface being operable
to control access by an application processor to a network access transceiver, in response to the application processor accessing the network access transceiver to provide a communications service requested by a subscriber, the control including
identifying the subscriber identity module of the communications terminal,
identifying the communications service which is to be provided by the application program requested by the subscriber, and
controlling deployment of the communications service depending on whether the identified communications service has been authorised for the identified subscriber identity module in accordance with the authorisation data communicated from an authorisation server.

16. A subscriber identity module as claimed in Claim 15, wherein the authorisation data includes one or more of
an indication of one or more communications services which have been authorised for the subscriber,
an indication of one or more access networks which the communications terminal can use to support the one or more communications services, or
one or more service providers which have been authorised to provide the one or more of the communications services to the communications terminal.
